# FASCICULE DE BREVET EUROPEEN

(11) **EP 4 005 863 B1**
(45) Date de publication et mention de la délivrance du brevet: **13.11.2024**
(21) Numéro de dépôt: 21211022.5
(22) Date de dépôt: 29.11.2021
(51) Int. Cl.: B60L 58/40, H01M 10/42, H01M 10/44, H01M 10/48, H01M 16/00, H01M 8/04858, H01M 8/04992, B60L 1/00, H01M 8/04537

(54) **SYSTÈME D' ALIMENTATION ÉLECTRIQUE ET PROCÉDÉ POUR PILOTER UN TEL SYSTÈME D' ALIMENTATION ÉLECTRIQUE**
STROMVERSORGUNGSSYSTEM UND VERFAHREN ZUR STEUERUNG EINES SOLCHEN STROMVERSORGUNGSSYSTEMS
POWER SUPPLY SYSTEM AND METHOD FOR CONTROLLING SUCH A POWER SUPPLY SYSTEM

(30) Priorité: 30.11.2020 FR 2012384
(43) Date de publication de la demande: 01.06.2022
(73) Titulaire: ALSTOM Holdings, 93400 Saint-Ouen-sur-Seine (FR)
(72) Inventeur: ROUILLE, Bruno, 65200 Ordizan (FR)
(74) Mandataire: Lavoix

(56) Documents cités:
- EP-A1- 2 903 068
- EP-A1- 3 709 416
- DE-A1- 10 233 821
- US-A1- 2002 162 694
- US-A1- 2013 065 089
- US-A1- 2019 160 963
- US-A1- 2019 229 357

## Description

La présente invention concerne des systèmes d'alimentation électrique et des procédés pour piloter de tels systèmes d'alimentation électrique.

L'invention est notamment applicable aux systèmes d'alimentation électrique utilisés dans des véhicules électriques.

Les véhicules électriques, et plus particulièrement les véhicules ferroviaires à traction électrique, comportent généralement un système de stockage d'électricité comprenant par exemple une ou plusieurs batteries d'accumulateurs électrochimiques.

Il est désormais courant d'ajouter une pile à combustible dans le système de stockage d'électricité afin de fournir une alimentation électrique en complément de la batterie et ainsi augmenter l'autonomie du véhicule.

Ainsi, la chaîne de traction du véhicule peut être alimentée lorsque le véhicule n'est pas approvisionné en électricité par une source extérieure, par exemple lorsque le véhicule circule dans une zone dépourvue de caténaire ou de rail d'alimentation.

Cependant, en pratique, l'autonomie de la pile à combustible est limitée à cause de contraintes techniques pesant sur le stockage de l'hydrogène à bord du véhicule.

En effet, l'hydrogène nécessaire au fonctionnement de la pile à combustible est stocké dans un réservoir spécifique embarqué à bord du véhicule. Mais les techniques de stockage d'hydrogène utilisables à ce jour nécessitent d'avoir recours à des réservoirs lourds et volumineux, qui sont en outre particulièrement coûteux. Par exemple, stocker un kilogramme d'hydrogène requiert un réservoir de 25 kilogrammes.

Dans beaucoup d'applications, par exemple dans le domaine du transport ferroviaire ou du transport de passagers, les équipements de traction doivent garder une taille et un poids raisonnables, de sorte qu'il n'est pas possible d'augmenter à volonté la quantité d'hydrogène stockée à bord du véhicule.

Toutefois, il est nécessaire que la pile à combustible possède une autonomie en énergie suffisante pour contribuer à l'alimentation du véhicule.

Le document US 2013/065089 A1 divulgue un système de gestion d'une pile à combustible dans un véhicule automobile, dans lequel la pile à combustible est couplée à une batterie au sein d'une chaîne de traction électrique du véhicule, cette batterie étant utilisée entre autres pour stocker temporairement de l'énergie électrique lors du freinage régénératif du véhicule.

Le document US 2019/229357 A1 divulgue un véhicule qui comprend une pile à combustible configurée pour fournir de l'énergie électrique, notamment pour alimenter un moteur du véhicule, ce dernier comportant un dispositif de stockage d'énergie, tel qu'une batterie, qui peut être rechargée avec la puissance excédentaire provenant de la pile à combustible.

Le document US 2019/160963 A1 divulgue un procédé de pilotage d'une pile à combustible dans un véhicule électrique, dans lequel un moteur et des appareils auxiliaires sont alimentés par un dispositif d'alimentation comportant une pile à combustible et une batterie électrique.

Le document US 2002/162694 A1 divulgue un véhicule routier avec un moteur électrique alimenté par un système d'alimentation comprenant une pile à combustible. Un contrôleur calcule une demande de charge électrique nécessaire pour faire fonctionner le véhicule.

C'est à ces inconvénients qu'entend plus particulièrement remédier l'invention, en proposant un système d'alimentation électrique amélioré, notamment pour un véhicule électrique, comportant une batterie et une pile à combustible, dans lequel la consommation d'hydrogène est optimisée.

A cet effet, l'invention concerne un procédé de pilotage d'un système d'alimentation électrique pour un véhicule électrique, un système d'alimentation électrique pour un véhicule électrique, et un véhicule électrique selon les revendications attachées.

Grâce à l'invention, l'optimisation du fonctionnement de la pile à combustible permet de réduire la consommation d'hydrogène, sans pour autant dégrader le fonctionnement de la pile à combustible ni sa capacité à fournir une alimentation électrique lorsque le véhicule en a besoin. Ainsi, pour un volume d'hydrogène stocké dans le véhicule, l'autonomie du véhicule est accrue sans avoir besoin d'installer un réservoir plus grand, qui serait plus coûteux, plus massif et plus encombrant.

L'invention sera mieux comprise et d'autres avantages de celle-ci apparaîtront plus clairement à la lumière de la description qui va suivre d'un mode de réalisation d'un système d'alimentation électrique donnée uniquement à titre d'exemple et faite en référence aux dessins annexés, dans lesquels :
[Fig 1] la figure 1 est un schéma synoptique d'un système d'alimentation électrique pour un véhicule ferroviaire conforme à un mode de réalisation de l'invention comportant une pile à combustible ;
[Fig 2] la figure 2 représente une courbe de rendement de la pile à combustible de la figure 1 ;
[Fig 3] la figure 3 est un diagramme illustrant des étapes d'un exemple d'un procédé de pilotage du système d'alimentation électrique de la figure 1 conforme à un mode de réalisation de l'invention.

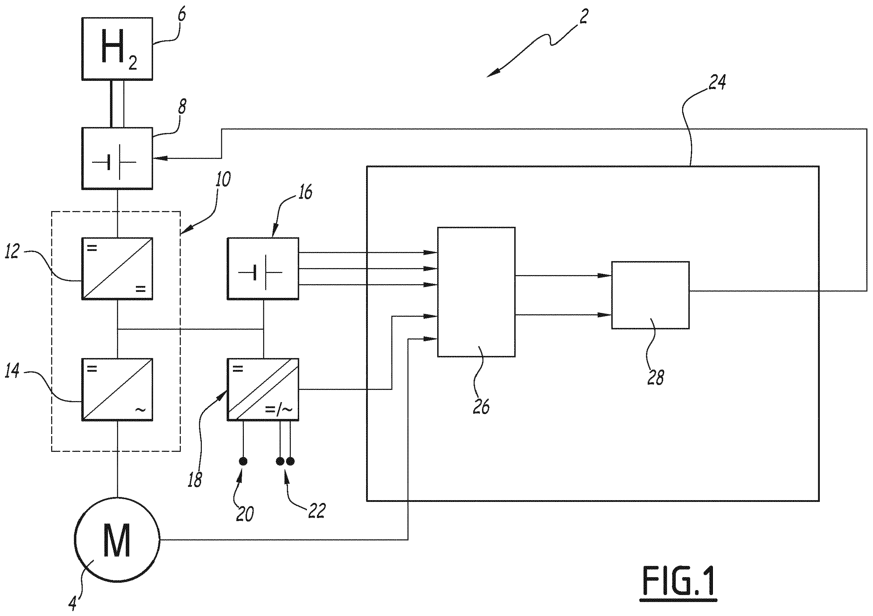

Sur la figure 1 est représenté un véhicule électrique 2 comportant un système d'alimentation électrique.

Le véhicule électrique 2 peut être véhicule ferroviaire à traction électrique.

Selon des exemples non limitatifs, le véhicule ferroviaire peut être un train de passagers, ou un train à grande vitesse, ou une locomotive, ou un véhicule de service tel qu'une draisine ou un locotracteur, ou un véhicule de transport urbain tel qu'un métro ou un tramway.

En variante, le véhicule 2 peut être un véhicule électrique routier, tel qu'un autobus électrique ou un camion électrique.

Selon des exemples, le véhicule 2 comporte une chaîne de traction électrique comprenant un ou plusieurs moteurs électriques 4 préférablement configurés pour entraîner le véhicule en déplacement le long d'une voie.

Dans l'exemple illustré, le ou chaque moteur 4 est couplé mécaniquement à une charge, telle qu'une ou plusieurs roues d'un bogie ou d'un essieu moteur. En variante, la chaîne de traction peut comporter une ou plusieurs charges de nature différente.

Le système d'alimentation électrique est également configuré pour alimenter un ou plusieurs équipements auxiliaires du véhicule 2.

Par exemple, les équipements auxiliaires comportent au moins un appareil auxiliaire, voire plusieurs appareils auxiliaires du véhicule 2, tels qu'un système de ventilation, chauffage ou climatisation, ou un ou plusieurs moteurs pour ouvrir ou fermer des portes automatiques du véhicule, ou un système d'éclairage, ou un système d'information voyageurs, ou tout autre appareil équivalent, ces exemples n'étant pas limitatifs.

Comme illustré sur la figure 1, le système d'alimentation électrique comporte un premier dispositif de stockage d'énergie comprenant un réservoir 6 d'hydrogène et une pile à combustible 8 tous deux embarqués à bord du véhicule 2.

Un dispositif de conversion 10 de puissance est connecté à la pile à combustible 8 et est configuré pour transformer la tension électrique délivrée par la pile à combustible 8 pour alimenter électriquement le moteur 4 et les équipements auxiliaires.

Le dispositif de conversion 10 comporte un premier convertisseur de puissance 12 et un deuxième convertisseur de puissance 14.

Le premier convertisseur 12 est connecté en sortie de la pile à combustible 8.

Par exemple, le premier convertisseur 12 est un convertisseur de tension élévateur de type continu-continu, tel qu'un hacheur.

Le deuxième convertisseur 14 est connecté au moteur 4. Par exemple, il s'agit d'un onduleur qui convertit la tension continue délivrée par le premier convertisseur 12 en une tension alternative servant à alimenter le moteur 4.

Selon un exemple non limitatif, la tension électrique aux bornes de la pile à combustible 8 peut varier en fonction de la puissance électrique demandée à la pile à combustible 8 lorsqu'elle est en fonctionnement. En pratique, cette tension électrique est inférieure à la tension électrique présente entre les conducteurs du bus d'alimentation continu interne (ici entre les convertisseurs 12 et 14).

Le système d'alimentation électrique comporte un deuxième dispositif de stockage d'énergie comprenant une batterie 16.

Avantageusement, la batterie 16 peut comporter une batterie d'accumulateurs électrochimiques. En variante, la batterie 16 peut comporter un ensemble de condensateurs ou de super-condensateurs, ou toute technologie appropriée de stockage d'électricité. Dans certains cas, tel que celui des condensateurs ou des super-condensateurs, il peut être nécessaire d'ajouter un convertisseur en sortie continu/continu, tel qu'un hacheur élévateur.

Selon un exemple non limitatif, la batterie 16 présente une tension supérieure ou égale à 750V DC entre ses bornes lorsqu'elle est chargée.

Avantageusement, la batterie 16 est connectée au dispositif de conversion 10 pour alimenter électriquement le moteur 4 et les équipements auxiliaires. Par exemple, la batterie 16 est connectée à l'entrée du deuxième convertisseur 14. Alternativement, le système d'alimentation peut comporter un deuxième étage de conversion continu/continu pour élever la tension de sortie à une tension de 1500V, par exemple pour être compatible avec la tension requise par le moteur de traction.

La batterie 16 peut également être rechargée par la pile à combustible 8 ou par de l'énergie électrique collectée par un dispositif de collecte du véhicule 2, tel qu'un pantographe ou un frotteur ou tout système équivalent.

L'alimentation des équipements auxiliaires est assurée par un convertisseur de puissance additionnel 18 pouvant être alimenté par la batterie 16 et/ou par la pile à combustible 8 par l'intermédiaire du dispositif de conversion 10.

Dans l'exemple illustré, l'entrée du convertisseur additionnel 18 est connecté à la sortie de la batterie 16 et à la sortie du premier convertisseur 12.

Avantageusement, le convertisseur additionnel 18 comporte une première sortie 20 qui délivre une tension continue et une deuxième sortie 22 qui délivre une deuxième tension alternative, qui peut être une tension électrique triphasée.

Selon un exemple non limitatif, la tension continue est égale à 24 V DC et la tension alternative est égale à 400 V AC.

Selon des modes de réalisation, la batterie 16 et la pile à combustible 8 sont aptes à stocker de l'énergie pour alimenter électriquement au moins en partie le véhicule 2, notamment pour alimenter le moteur 4 et/ou des équipements auxiliaires, lorsque le véhicule 2 n'est pas alimenté par une source d'alimentation extérieure. C'est par exemple le cas lorsque le véhicule 2 circule sur une portion de voie dépourvue de caténaire ou de rail d'alimentation.

La supervision et la régulation du système d'alimentation électrique, et notamment du premier dispositif de stockage, qui est la source primaire d'énergie et du deuxième dispositif de stockage, qui est le système de stockage d'énergie, sont réalisées automatiquement par un ou plusieurs dispositifs électroniques de commande, qui peuvent appartenir au système d'alimentation électrique.

Dans des modes de réalisation, la pile à combustible 8 est préférentiellement utilisée en complément de la batterie 16.

En effet, la batterie 16 est préférentiellement utilisée de façon à ce que son état de charge (« state of charge » en anglais) reste compris dans un intervalle prédéterminé, par exemple entre 20% et 90% de sa capacité maximale, ceci afin d'éviter une usure prématurée de la batterie ou une dégradation de ses performances.

La pile à combustible 8 est donc préférentiellement sollicitée lorsque la puissance électrique demandée à la batterie risquerait d'entrainer une variation de son état de charge en dehors de l'intervalle prédéterminé.

De plus, la batterie 16, de par sa nature, présente un temps de réponse plus court que la pile à combustible 8 et supporte mieux les variations de puissance répétées que la pile à combustible 8.

La pile à combustible 8 est donc préférentiellement sollicitée pour répondre à des appels de puissance sur des temps longs, plutôt que pour répondre rapidement à des appels de puissance pouvant varier rapidement et avec une amplitude de variation élevée.

Par exemple, un contrôleur électronique associé à la batterie 16 est programmé pour calculer une valeur cible de l'état de charge, qui est recalculée au cours du temps en fonction de l'évolution de la charge de la batterie 16 et des sollicitations imposées au système d'alimentation par la chaîne de traction et par les équipements auxiliaires.

Le contrôleur électronique détermine, à partir de la valeur cible d'état de charge calculée, une première valeur de consigne de puissance électrique que doit fournir la batterie 16.

La gestion énergétique de la pile à combustible 8 est réalisée par un dispositif électronique de commande 24 qui est apte à définir une deuxième valeur de consigne de puissance que doit fournir la pile à combustible 8 de sorte à ce que le système d'alimentation réponde à ses sollicitations tout en permettant à la batterie 16 d'atteindre la première valeur de consigne calculée.

Notamment, le dispositif de commande 24 est programmé pour piloter la pile à combustible 8 pour que cette dernière fournisse une puissance électrique dont la valeur est optimisée, pour un instant donné, de manière à ce que la pile à combustible 8 fonctionne avec un rendement maximal et en fonction des sollicitations du système d'alimentation électrique.

Pour ce faire, le dispositif de commande 24 est apte à piloter automatiquement le système d'alimentation en fonction de cette deuxième consigne de puissance calculée, par exemple en modifiant la quantité d'air et/ou la quantité d'hydrogène fournis en entrée de la pile à combustible 8, pour modifier la puissance fournie par la pile à combustible 8. Le dispositif de commande 24 peut également être configuré pour modifier le fonctionnement du dispositif de conversion 10, par exemple en modifiant la consigne en courant du premier convertisseur 12.

Le dispositif de commande 24 peut aussi piloter un dispositif de commutation électrique permettant de connecter ou déconnecter la pile à combustible 8 du reste du système d'alimentation.

Dans de nombreux modes de réalisation, le dispositif de commande 24 est implémenté par un circuit électronique, par exemple monté sur une carte électronique.

Par exemple, le dispositif de commande 24 comporte un processeur, tel qu'un microcontrôleur programmable, et une mémoire informatique couplée au processeur et formant un support d'enregistrement de données lisible par ordinateur.

Selon des exemples, la mémoire est une mémoire morte ROM, ou une mémoire vive RAM, ou une mémoire non volatile de type EPROM, ou EEPROM, ou Flash, ou toute technologie de mémoire appropriée, ou toute combinaison possible de ces technologies de mémoire.

La mémoire comporte des instructions exécutables et/ou un code logiciel notamment pour mettre en oeuvre un procédé conforme à des modes de réalisation de l'invention lorsque ces instructions et/ou ce code logiciel sont exécutées par le processeur.

En variante, le dispositif de commande 24 comporte un composant logique programmable (FPGA) ou un circuit intégré dédié configuré pour mettre en oeuvre de tels procédés.

Selon des modes de réalisation, le dispositif de commande 24 comporte un premier module de calcul 26, ou module de gestion d'énergie, programmé pour déterminer une valeur ou un intervalle de valeurs indiquant la puissance électrique que doit délivrer la pile à combustible 8.

Par exemple, le module 26 est apte à mesurer et/ou à déterminer, pour un instant donné, les grandeurs électriques suivantes :
- la puissance requise par la chaîne de traction, par exemple en réponse à un ordre d'accélération ou un ordre de freinage émis par un conducteur,
- la puissance requise par les équipements auxiliaires,
- l'état de charge de la batterie 16,
- la puissance électrique maximale que peut fournir la batterie 16 lorsqu'elle est dans un état de charge ou un état de déchargement.

Dans l'exemple illustré, le module 26 est ensuite programmé pour calculer la puissance électrique que doit théoriquement délivrer la pile à combustible, en fonction des grandeurs électriques déterminées, mais aussi en fonction de la consigne de puissance de la batterie.

Le module 26 calcule une valeur minimale et une valeur maximale de puissance que doit fournir la pile à combustible 8. La puissance électrique que doit délivrer la pile à combustible est comprise entre ladite valeur minimale et ladite valeur maximale.

Selon un exemple, la valeur minimale est égale à la somme de la puissance requise par la chaîne de traction et la puissance requise par les composants auxiliaires à laquelle est soustraite la puissance maximale pouvant être délivrée par la batterie 16, notamment lorsqu'elle se décharge. La valeur minimale est nulle si la quantité ci-dessus est inférieure à zéro.

Selon un exemple, la valeur maximale est égale à la somme de la puissance requise par la chaîne de traction et la puissance requise par les composants auxiliaires à laquelle est soustraite la puissance minimale pouvant être délivrée par la batterie 16, notamment lorsqu'elle se décharge. La valeur maximale est nulle si la quantité ci-dessus est inférieure à zéro.

Ainsi, la puissance que doit fournir la pile à combustible pour compléter la puissance fournie par la batterie 16 est égale à la puissance nécessaire pour que la batterie atteigne l'état de charge cible, à laquelle on soustrait la puissance requise par la chaîne de traction et la puissance requise par les appareils auxiliaires.

Selon des modes de réalisation, le dispositif de commande 24 comporte également un deuxième module de calcul 28, ou module d'optimisation, configuré pour calculer une valeur cible de puissance que doit fournir la pile à combustible 8.

Ce calcul est ici effectué à partir des valeurs de puissance déterminées par le premier module 26, et en fonction d'une courbe de rendement prédéterminée exprimant le rendement de la pile à combustible 8. Une telle courbe est par exemple stockée dans une mémoire du dispositif de commande 24.

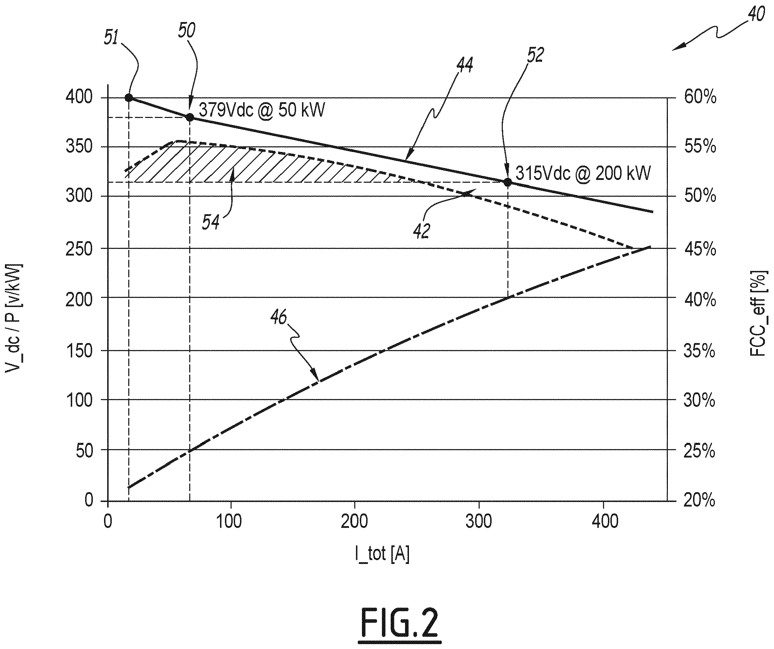

La figure 2 représente un graphe 40 illustrant un exemple de fonctionnement du système d'alimentation électrique du véhicule 2.

Sur ce graphe, l'axe des abscisses indique le courant total l_tot, exprimé en ampères, délivré par la pile à combustible 8. En ordonnées, l'axe de gauche correspond au soit à la tension électrique délivrée par le système d'alimentation (courbe 44) exprimée en Volt, soit à la puissance délivrée par le système d'alimentation ( courbe 46), exprimée en kW. L'axe de droite indique le rendement énergétique FCC_eff de la pile à combustible 8 (courbe 42).

Sur ce graphe 40, les courbes 44, 46 indiquent, respectivement, la tension électrique du système d'alimentation et la puissance totale délivrée par le système d'alimentation.

Le point 50 représente la puissance donnant le rendement maximum de la pile à combustible correspondant ici à une tension 379 V DC pour une puissance de 50kW .

Le premier point 51 représente une première limite de puissance, correspondant ici à une tension de 390 V DC pour une puissance de 20 kW.

Le deuxième point 52 représente une deuxième limite de puissance, associée à une deuxième valeur limite, correspondant ici à une tension de 315 V DC pour une puissance de 200 kW.

La zone 54 désigne une zone de fonctionnement de la pile à combustible 8 dans laquelle elle possède un rendement maximal ou optimal. La zone 54 correspond à un ensemble de points de fonctionnement de la pile à combustible 8 pour lesquels les valeurs sont comprises entre la première limite 51 et la deuxième limite 52 et dont les valeurs supérieures sont bornées par la courbe de rendement énergétique 42 de la pile à combustible 8.

De préférence, pour définir la deuxième consigne de puissance, le module 28 sélectionne un point de fonctionnement compris dans la zone 54, de préférence correspondant au maximum de la courbe de rendement 42 dans la zone 54 (point 50).

Le module 28 choisit à partir de cette courbe de rendement 42 une valeur de consigne comprise entre les valeurs minimale et maximale calculées par le module 26 et qui satisfasse à au moins plusieurs des critères suivants :
- la puissance fournie par la batterie 16 puisse, grâce au complément de puissance fourni par la pile à combustible 8, converger vers la première valeur de consigne ;
- les ordres de commande émis par un conducteur, tels que des ordres d'accélération ou de freinage, soient dans la mesure du possible respectés ;
- au moins une partie, voire la totalité, des équipements auxiliaires puisse être correctement alimentée ;
- les variations de la puissance demandée à la pile à combustible 8 au cours du temps soient de préférence lentes.

Par exemple, la pile à combustible fonctionne à un niveau égal au point de rendement maximal tel que déterminé par la courbe de rendement 42, ou à un niveau proche de ce point de rendement maximal, par exemple à plus ou moins 10% du point de rendement maximal.

La courbe de rendement 42 peut être prédéfinie à l'avance, par exemple en usine à partir de spécifications de la pile à combustible 8. En variante, la courbe de rendement 42 peut être calculée par le dispositif 24 et remise à jour au cours du temps en fonction du fonctionnement du système d'alimentation et/ou en fonction de l'usure de la pile à combustible 8.

Dans certaines implémentations, si la puissance demandée à la pile à combustible 8 est faible, par exemple située en dessous de son seuil minimum de fonctionnement, alors la pile à combustible 8 n'est pas utilisée afin de ne pas surcharger la batterie 16. Dans ce cas, le dispositif de commande 24 commande la déconnexion de la pile à combustible 8 ou ne démarre pas le hacheur 12.

Dans d'autres implémentations, la consigne de traction ou de freinage à l'origine de la variation de puissance électrique requise peut devoir être bridée par le dispositif de commande 24 dans le cas extrême où la puissance demandée est trop importante et que le système d'alimentation électrique ne peut pas répondre à la demande, par exemple parce que ni la pile à combustible 8 ni la batterie 16 ne peut fournir la puissance requise. Le dispositif de commande 24 peut aussi demander aux équipements auxiliaires de réduire leur consommation électrique.

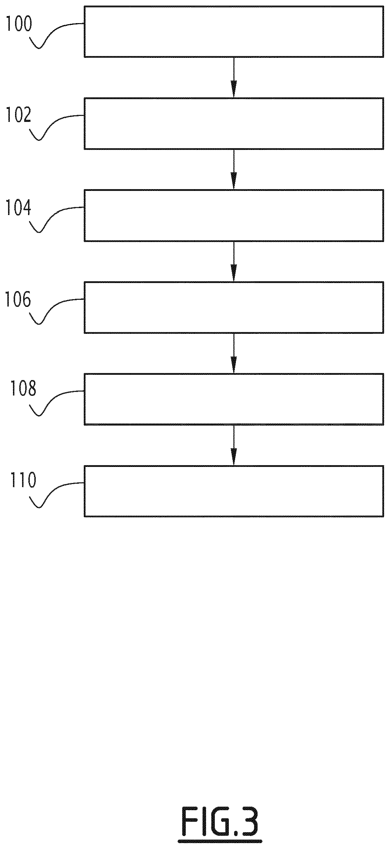

Un exemple de fonctionnement est maintenant décrit en référence à l'exemple de la figure 3.

Le procédé débute à l'étape 100, par exemple en réponse à un ordre de commande émis par un conducteur du train, par exemple un ordre d'accélération ou de freinage émis au moyen d'un manipulateur de traction et qui a pour effet de modifier la consommation électrique du moteur 4 et/ou des équipements auxiliaires.

En variante, l'étape 100 peut être exécutée régulièrement, par exemple avec une périodicité prédéfinie.

Selon d'autres variantes, l'étape 100 peut être exécutée lorsque le véhicule 2 atteint une position géographique précise, par exemple lorsque le véhicule 2 passe par des points spécifiques d'une trajectoire prédéfinie au cours de son déplacement.

Lors de l'étape 100, le dispositif de commande 24 reçoit une information, à savoir une première valeur de consigne correspondant à la puissance électrique que la batterie doit fournir pour que le système d'alimentation puisse alimenter la chaîne de traction et les équipements auxiliaires.

Lors d'une étape 102, le module 26 détermine la puissance électrique requise par la chaîne de traction et plus précisément par le ou les moteurs 4 ainsi que la puissance électrique requise par les équipements auxiliaires.

Lors d'une étape 104, le module 26 détermine l'état de la batterie, notamment l'état de charge de la batterie et la puissance maximale disponible en chargement ou la puissance maximale disponible au déchargement.

Lors d'une étape 106, le module 26 calcule la valeur maximale et la valeur minimale de puissance électrique que doit délivrer la pile à combustible 8 en fonction de l'état du système d'alimentation et des sollicitations auxquelles il doit faire face, tels que déterminés lors des étapes 102 et 104.

Lors d'une étape 108, le deuxième module 28 calcule la valeur optimisée de puissance électrique que doit fournir la pile à combustible à partir de la valeur maximale et la valeur minimale de puissance électrique calculées par le module 26 et en fonction de la courbe de rendement 42.

Enfin, lors d'une étape 110, le dispositif de commande 24 utilise la valeur optimisée de puissance électrique ainsi calculée comme consigne pour piloter le système d'alimentation électrique en conséquence, de manière à ce que la pile à combustible 8 fournisse la puissance électrique correspondant ou, si nécessaire, soit déconnectée du reste du système d'alimentation électrique.

Grâce à l'invention, l'optimisation du fonctionnement de la pile à combustible permet de réduire la consommation d'hydrogène, sans pour autant dégrader le fonctionnement de la pile à combustible ni sa capacité à fournir une alimentation électrique lorsque le véhicule en a besoin. Ainsi, pour un volume d'hydrogène stocké dans le véhicule, l'autonomie du véhicule est accrue sans avoir besoin d'installer un réservoir plus grand, qui serait plus coûteux, plus massif et plus encombrant.

Toute caractéristique de l'un des modes de réalisation décrite ci-dessus peut être mise en oeuvre dans les autres modes de réalisation et variantes décrits.

## Revendications

1. Procédé de pilotage d'un système d'alimentation électrique pour un véhicule électrique (2) comportant une batterie (16), une pile à combustible (8) et un dispositif de conversion de puissance (10) connecté à la batterie (16) et à la pile à combustible (8), le système d'alimentation électrique étant configuré pour alimenter une chaîne de traction électrique (4) du véhicule et au moins un appareil auxiliaire, le procédé comportant des étapes consistant à :
- acquérir (100) une première valeur de consigne de puissance correspondant à la puissance électrique que doit fournir la batterie (16), ladite première valeur de consigne de puissance étant déterminée à partir d'une valeur cible de l'état de charge de la batterie (16)
- déterminer (102) la puissance électrique requise par la chaîne de traction et la puissance électrique requise par ledit au moins un appareil auxiliaire ;
- déterminer (104) l'état de la batterie, notamment l'état de charge de la batterie et la puissance maximale disponible que peut fournir la batterie ;
- calculer (106) au moins une valeur de puissance électrique que doit délivrer la pile à combustible (8) en fonction de l'état de la batterie et de la puissance électrique requise par la chaîne de traction et par ledit au moins un appareil auxiliaire ;
- calculer (108), à partir de la valeur de puissance électrique calculée, une deuxième valeur de consigne de puissance électrique que doit fournir la pile à combustible (8), pour que la pile à combustible (8) fonctionne à un niveau égal ou proche de son point de rendement maximal ;
- piloter (100) le système d'alimentation en fonction de la deuxième valeur de consigne de puissance électrique calculée,
**caractérisé en ce que** calculer (106) au moins une valeur de puissance électrique que doit délivrer la pile à combustible (8) comporte le calcul d'une valeur minimale et une valeur maximale de puissance que doit fournir la pile à combustible, la deuxième valeur de consigne de puissance électrique étant comprise entre ladite valeur minimale et ladite valeur maximale,
**en ce que** la valeur de puissance électrique calculée correspond à la puissance que doit fournir la pile à combustible pour compléter la puissance fournie par la batterie, la valeur de puissance électrique calculée étant égale à la puissance nécessaire pour que la batterie atteigne ladite valeur cible de l'état de charge à laquelle on soustrait la puissance requise par la chaîne de traction et la puissance requise par ledit au moins un appareil auxiliaire;
et **en ce que** le calcul de la deuxième valeur de consigne de puissance est réalisé à partir d'une courbe de rendement (42) prédéfinie de la pile à combustible (8), en sélectionnant un point de fonctionnement (50) de la pile à combustible correspondant au maximum de la courbe de rendement (42) dans une zone de fonctionnement (54) comprise entre la valeur minimum et la valeur maximum précédemment calculée, et en satisfaisant à au moins plusieurs des critères suivants :
- la puissance électrique fournie par la batterie (16) converge vers la première valeur de consigne,
- les ordres de commande émis par un conducteur sont respectés,
- ledit au moins un appareil auxiliaire est alimenté, et
- les variations de la puissance demandée à la pile à combustible (8) au cours du temps sont lentes.

2. Procédé selon la revendication 1, dans lequel la valeur minimale est égale à la somme de la puissance requise par la chaîne de traction et la puissance requise par ledit au moins un appareil auxiliaire à laquelle est soustraite la puissance maximale pouvant être délivrée par la batterie (16).

3. Procédé selon la revendication 1 ou la revendication 2, dans lequel la valeur maximale est égale à la somme de la puissance requise par la chaîne de traction et la puissance requise par ledit au moins un appareil auxiliaire à laquelle est soustraite la puissance minimale pouvant être délivrée par la batterie.

4. Procédé selon l'une quelconque des revendications précédentes, dans lequel la première valeur de consigne de puissance est préalablement calculée en fonction de ladite valeur cible de l' état de charge de la batterie.

5. Procédé selon l'une quelconque des revendications précédentes, dans lequel le procédé est mis en oeuvre en réponse à un ordre de commande émis par un conducteur du véhicule, par exemple un ordre d'accélération ou de freinage qui a pour effet de modifier la consommation électrique de la chaîne de traction et/ou dudit au moins un appareil auxiliaire.

6. Procédé selon l'une quelconque des revendications précédentes, dans lequel la deuxième valeur de consigne de puissance est choisie pour que, lorsque la pile à combustible fournit une puissance électrique correspondant à la deuxième valeur de consigne de puissance, la batterie (16) délivre une puissance électrique correspondant à la première valeur de consigne calculée.

7. Système d'alimentation électrique pour un véhicule électrique (2) comportant une batterie (16), une pile à combustible (8) et un dispositif de conversion de puissance (10) connecté à la batterie (16) et à la pile à combustible (8), le système d'alimentation électrique étant configuré pour alimenter une chaîne de traction électrique (4) du véhicule et au moins un appareil auxiliaire, le système d'alimentation électrique comportant un dispositif électronique de commande (24) programmé pour mettre en oeuvre des étapes consistant à :
- acquérir (100) une première valeur de consigne de puissance correspondant à la puissance électrique que doit fournir la batterie (16), ladite première valeur de consigne de puissance étant déterminée à partir d'une valeur cible de l'état de charge de la batterie (16);
- déterminer (102) la puissance électrique requise par la chaîne de traction et la puissance électrique requise par ledit au moins un appareil auxiliaire ;
- déterminer (104) l'état de la batterie, notamment l'état de charge de la batterie et la puissance maximale disponible que peut fournir la batterie ;
- calculer (106) au moins une valeur de puissance électrique que doit délivrer la pile à combustible (8) en fonction de l'état de la batterie et de la puissance électrique requise par la chaîne de traction et par ledit au moins un appareil auxiliaire ;
- calculer (108), à partir de la valeur de puissance électrique calculée, une deuxième valeur de consigne de puissance électrique que doit fournir la pile à combustible (8), pour que la pile à combustible (8) fonctionne à un niveau égal ou proche de son point de rendement maximal;
- piloter (100) le système d'alimentation en fonction de la deuxième valeur de consigne de puissance électrique calculée ;
**caractérisé en ce que** calculer (106) au moins une valeur de puissance électrique que doit délivrer la pile à combustible (8) comporte le calcul d'une valeur minimale et une valeur maximale de puissance que doit fournir la pile à combustible, la deuxième valeur de consigne de puissance électrique étant comprise entre ladite valeur minimale et ladite valeur maximale,
**en ce que** la valeur de puissance électrique calculée correspond à la puissance que doit fournir la pile à combustible pour compléter la puissance fournie par la batterie, la valeur de puissance électrique calculée étant égale à la puissance nécessaire pour que la batterie atteigne ladite valeur cible de l'état de charge à laquelle on soustrait la puissance requise par la chaîne de traction et la puissance requise par ledit au moins un appareil auxiliaire,
et **en ce que** le calcul de la deuxième valeur de consigne est réalisé à partir d'une courbe de rendement (42) prédéfinie de la pile à combustible (8), en sélectionnant un point de fonctionnement de la pile à combustible correspondant au maximum de la courbe de rendement (42) dans une zone de fonctionnement comprise entre la valeur minimum et la valeur maximum précédemment calculée et en satisfaisant à au moins plusieurs des critères suivants :
- la puissance électrique fournie par la batterie (16) converge vers la première valeur de consigne,
- les ordres de commande émis par un conducteur sont respectés,
- ledit au moins un appareil auxiliaire est alimenté, et
- les variations de la puissance demandée à la pile à combustible (8) au cours du temps sont lentes.

8. Véhicule électrique (2) comportant un système d'alimentation électrique conforme à la revendication 7.

## Patentansprüche

1. Steuerungsverfahren eines Stromversorgungssystems für ein Elektrofahrzeug (2), umfassend eine Batterie (16), eine Brennstoffzelle (8) und eine Leistungsumwandlungsvorrichtung (10), die mit der Batterie (16) und der Brennstoffzelle (8) verbunden ist, wobei das Stromversorgungssystem konfiguriert ist, um einen elektrischen Antriebsstrang (4) des Fahrzeugs und mindestens ein Hilfsgerät zu versorgen, das Verfahren umfassend Schritte, die aus Folgendem bestehen:
- Erfassen (100) eines ersten Leistungsvorgabewerts, der der elektrischen Leistung entspricht, die die Batterie (16) bereitstellen soll, wobei der erste Leistungsvorgabewert anhand eines Zielwerts des Ladezustands der Batterie (16) bestimmt wird;
- Bestimmen (102) der elektrischen Leistung, die von dem Antriebsstrang benötigt wird, und der elektrischen Leistung, die von dem mindestens einen Hilfsgerät benötigt wird;
- Bestimmen (104) des Zustands der Batterie, insbesondere des Ladezustands der Batterie und der maximal verfügbaren Leistung, die die Batterie bereitstellen kann;
- Berechnen (106) mindestens eines Werts elektrischer Leistung, die die Brennstoffzelle (8) abhängig von dem Zustand der Batterie und der von der Antriebskette und dem mindestens einen Hilfsgerät benötigten elektrischen Leistung bereitstellen soll;
- Berechnen (108), anhand des berechneten Werts elektrischer Leistung, eines zweiten Vorgabewerts elektrischer Leistung, die die Brennstoffzelle (8) bereitstellen soll, damit die Brennstoffzelle (8) auf oder nahe ihrem maximalen Wirkungsgradpunkt betrieben wird;
- Steuern (100) des Versorgungssystems abhängig von dem berechneten zweiten elektrischen Leistungsvorgabewert,
**dadurch gekennzeichnet, dass** ein Berechnen (106) mindestens eines Werts elektrischer Leistung, die von der Brennstoffzelle (8) bereitgestellt werden soll, das Berechnen eines Minimalwerts und eines Maximalwerts der Leistung, die die Brennstoffzelle bereitstellen soll, umfasst, wobei der zweite Vorgabewert elektrischer Leistung zwischen dem Minimalwert und dem Maximalwert liegt,
dass der berechnete Wert elektrischer Leistung der Leistung entspricht, die die Brennstoffzelle bereitstellen soll, um die von der Batterie bereitgestellte Leistung zu ergänzen, wobei der berechnete Wert elektrischer Leistung gleich wie die Leistung ist, die die Batterie benötigt, um den Sollwert des Ladezustands zu erreichen, wovon die von dem Antriebsstrang benötigte Leistung und die von dem mindestens einen Hilfsgerät benötigte Leistung abgezogen werden;
und dass die Berechnung des zweiten Leistungsvorgabewerts anhand einer vordefinierten Wirkungsgradkurve (42) der Brennstoffzelle (8) erfolgt, indem ein Betriebspunkt (50) der Brennstoffzelle ausgewählt wird, die dem Maximum der Wirkungsgradkurve (42) in einem Betriebsbereich (54) zwischen dem zuvor berechneten Minimalwert und dem Maximalwert entspricht, und wobei mindestens mehrere der folgenden Kriterien erfüllt sind:
- die von der Batterie (16) bereitgestellte elektrische Leistung konvergiert in Richtung des ersten Vorgabewerts,
- die von einem Fahrer erteilten Befehlsbefehle werden befolgt,
- das mindestens eine Hilfsgerät wird versorgt, und
- die Änderungen der von der Brennstoffzelle (8) geforderten Leistung sind lang im Verlauf der Zeit.

2. Verfahren nach Anspruch 1, wobei der Minimalwert gleich wie die Summe aus der von dem Antriebsstrang benötigten Leistung und der von dem mindestens einen Hilfsgerät benötigten Leistung ist, wovon die maximale Leistung abgezogen wird, die von der Batterie (16) bereitgestellt werden kann.

3. Verfahren nach Anspruch 1 oder Anspruch 2, wobei der Maximalwert gleich wie die Summe aus der von dem Antriebsstrang benötigten Leistung und der von dem mindestens einen Hilfsgerät benötigten Leistung ist, wovon die minimale Leistung abgezogen wird, die von der Batterie bereitgestellt werden kann.

4. Verfahren nach einem der vorherigen Ansprüche, wobei der erste Leistungsvorgabewert zuvor abhängig von dem Sollwert des Ladezustands der Batterie berechnet wird.

5. Verfahren nach einem der vorherigen Ansprüche, wobei das Verfahren als Reaktion auf einen von einem Fahrer des Fahrzeugs erteilten Steuerbefehl durchgeführt wird, beispielsweise ein Beschleunigungs- oder Bremsbefehl, der dazu führt, dass der Stromverbrauch des Antriebsstrangs und/oder des mindestens einen Hilfsgeräts geändert wird.

6. Verfahren nach einem der vorherigen Ansprüche, wobei der zweite Leistungsvorgabewert gewählt wird, damit, wenn die Brennstoffzelle eine berechnete elektrische Leistung bereitstellt, die dem zweiten Leistungsvorgabewert entspricht, die Batterie (16) eine elektrische Leistung bereitstellt, die dem ersten berechneten Vorgabewert entspricht.

7. Stromversorgungssystem eines für ein Elektrofahrzeug (2), umfassend eine Batterie (16), eine Brennstoffzelle (8) und eine Leistungsumwandlungsvorrichtung (10), die mit der Batterie (16) und der Brennstoffzelle (8) verbunden ist, wobei das Stromversorgungssystem konfiguriert ist, um einen elektrischen Antriebsstrang (4) des Fahrzeugs und mindestens ein Hilfsgerät zu versorgen, das Stromversorgungssystem umfassend eine elektronische Steuerungsvorrichtung (24), die programmiert ist, um Schritte durchzuführen, die aus Folgendem bestehen:
- Erfassen (100) eines ersten Leistungsvorgabewerts, der der elektrischen Leistung entspricht, die die Batterie (16) bereitstellen soll, wobei der erste Leistungssollwert anhand eines Zielwerts des Ladezustands der Batterie (16) bestimmt wird;
- Bestimmen (102) der elektrischen Leistung, die von dem Antriebsstrang benötigt wird, und der elektrischen Leistung, die von dem mindestens einen Hilfsgerät benötigt wird;
- Bestimmen (104) des Zustands der Batterie, insbesondere des Ladezustands der Batterie und der maximal verfügbaren Leistung, die die Batterie bereitstellen kann;
- Berechnen (106) mindestens eines Werts elektrischer Leistung, die die Brennstoffzelle (8) abhängig von dem Zustand der Batterie und der von der Antriebskette und dem mindestens einen Hilfsgerät benötigten elektrischen Leistung bereitstellen soll;
- Berechnen (108), anhand des berechneten Werts elektrischer Leistung, eines zweiten Vorgabewerts elektrischer Leistung, die die Brennstoffzelle (8) bereitstellen soll, damit die Brennstoffzelle (8) auf oder nahe ihrem maximalen Wirkungsgradpunkt betrieben wird;
- Steuern (100) des Versorgungssystems abhängig von dem berechneten zweiten elektrischen Leistungsvorgabewert;
**dadurch gekennzeichnet, dass** ein Berechnen (106) mindestens eines Werts elektrischer Leistung, die von der Brennstoffzelle (8) bereitgestellt werden soll, das Berechnen eines Minimalwerts und eines Maximalwerts der Leistung, die die Brennstoffzelle bereitstellen soll, umfasst, wobei der zweite Vorgabewert elektrischer Leistung zwischen dem Minimalwert und dem Maximalwert liegt,
dass der berechnete Wert elektrischer Leistung der Leistung entspricht, die die Brennstoffzelle bereitstellen soll, um die von der Batterie bereitgestellte Leistung zu ergänzen, wobei der berechnete Wert elektrischer Leistung gleich wie die Leistung ist, die die Batterie benötigt, um den Sollwert des Ladezustands zu erreichen, wovon die von dem Antriebsstrang benötigte Leistung und die von dem mindestens einen Hilfsgerät benötigte Leistung abgezogen werden,
und dass die Berechnung des zweiten Vorgabewerts anhand einer vordefinierten Wirkungsgradkurve (42) der Brennstoffzelle (8) erfolgt, indem ein Betriebspunkt der Brennstoffzelle ausgewählt wird, die dem Maximum der Wirkungsgradkurve (42) in einem Betriebsbereich zwischen dem zuvor berechneten Minimalwert und dem Maximalwert entspricht, und wobei mindestens mehrere der folgenden Kriterien erfüllt sind:
- die von der Batterie (16) bereitgestellte elektrische Leistung konvergiert in Richtung des ersten Vorgabewerts,
- die von einem Fahrer erteilten Befehlsbefehle werden befolgt,
- das mindestens eine Hilfsgerät wird versorgt, und
- die Änderungen der von der Brennstoffzelle (8) geforderten Leistung sind lang im Verlauf der Zeit.

8. Elektrofahrzeug (2), umfassend ein Stromversorgungssystem nach Anspruch 7.

## Claims

1. A method of controlling a power supply system for an electric vehicle (2) comprising a battery (16), a fuel cell (8) and a power conversion device (10) connected to the battery (16) and the fuel cell (8), the power supply system being configured to supply power to an electric drivetrain (4) of the vehicle and to at least one auxiliary apparatus, **characterised in that** the method comprises the steps of:
- acquiring (100) a first power setpoint value corresponding to the electrical power to be supplied by the battery (16), said first power setpoint value being determined based on a target value of a state of charge of the battery (16);
- determining (102) the electrical power required by the drivetrain and the electrical power required by the at least one auxiliary apparatus;
- determining (104) the state of the battery, particularly the state of charge of the battery and the maximum available power that the battery can provide;
- calculating (106) at least one value of electrical power to be delivered by the fuel cell (8) depending on the state of the battery and the electrical power required by the drivetrain and the at least one auxiliary apparatus;
- calculating (108), from the calculated value of electrical power, a second setpoint value for the electrical power to be delivered by the fuel cell (8), this value being optimised so that the fuel cell (8) operates at or near its maximum efficiency point;
- controlling (100) the power supply system according to the second calculated electrical power setpoint value,
**characterized in that** calculating (106) at least one value of electrical power to be delivered by the fuel cell (8) comprises the calculating of a minimum and a maximum value of power to be delivered by the fuel cell, the second electrical power setpoint value being between said minimum and said maximum value,
**in that** the calculated electrical power value corresponds to the power required from the fuel cell to supplement the power supplied by the battery, the calculated electrical power value being equal to the power required for the battery to reach said target value of the state of charge, minus the power required by the drivetrain and the power required by said at least one auxiliary equipment,
and **in that** the calculating of the second power setpoint value is carried out on the basis of a predefined efficiency curve (42) of the fuel cell (8), by selecting an operating point (50) of the fuel cell corresponding to the maximum of the efficiency curve (42) within an operating range (54) comprised between the minimum value and the previously calculated maximum value, and by satisfying at least a plurality of the following criteria:
- the power supplied by the battery (16) converge towards the first setpoint value,
- control commands issued by a driver are complied,
- said at least one auxiliary equipment is powered, and
- the fluctuations in the power required from the fuel cell (8) over time are slow.

2. A method according to claim 1, wherein the minimum value is equal to the sum of the power required by the drivetrain and the power required by said at least one auxiliary equipment minus the maximum power that can be delivered by the battery (16).

3. A method according to claim 1 or claim 2, wherein the maximum value is equal to the sum of the power required by the drivetrain and the power required by said at least one auxiliary equipment minus the minimum power that can be delivered by the battery.

4. A method according to any one of the preceding claims, wherein the first power setpoint value is previously calculated based on said target value of the state of charge of the battery.

5. A method according to any one of the preceding claims, wherein the method is implemented in response to a control command from a driver of the vehicle, for example an acceleration or braking command, which has the effect of changing the power consumption of the drivetrain and/or of said at least one auxiliary equipment.

6. A method according to any one of the preceding claims, wherein the second power setpoint value is selected so that when the fuel cell delivers electrical power corresponding to the second power setpoint value, the battery (16) delivers electrical power corresponding to the calculated first setpoint value.

7. A power supply system for an electric vehicle (2) comprising a battery (16), a fuel cell (8) and a power conversion device (10) connected to the battery (16) and the fuel cell (8), the power supply system being configured to supply power to an electric drivetrain (4) of the vehicle and at least one auxiliary apparatus, **characterised in that** the power supply system comprises an electronic control device (24) programmed to implement the steps consisting of:
- acquiring (100) a first power setpoint value corresponding to the electrical power to be supplied by the battery (16), said first power setpoint value being determined based on a target value of a state of charge of the battery (16);
- determining (102) the electrical power required by the drivetrain and the electrical power required by the at least one auxiliary apparatus;
- determining (104) the state of the battery, particularly the state of charge of the battery and the maximum available power that the battery can provide;
- calculating (106) at least one value of electrical power to be delivered by the fuel cell (8) depending on the state of the battery and the electrical power required by the drivetrain and the at least one auxiliary apparatus;
- calculating (108), from the calculated value of electrical power, a second setpoint value for the electrical power to be delivered by the fuel cell (8), so that the fuel cell (8) operates at or near its maximum efficiency point;
- controlling (100) the power supply system according to the second calculated electrical power setpoint value,
**characterized in that** calculating (106) at least one value of electrical power to be delivered by the fuel cell (8) comprises the calculating of a minimum and a maximum value of power to be delivered by the fuel cell, the second electrical power setpoint value being between said minimum and said maximum value,
**in that** the calculated electrical power value corresponds to the power required from the fuel cell to supplement the power supplied by the battery, the calculated electrical power value being equal to the power required for the battery to reach said target value of the state of charge, minus the power required by the drivetrain and the power required by said at least one auxiliary equipment,
and **in that** the calculating of the second setpoint value is carried out on the basis of a predefined efficiency curve (42) of the fuel cell (8), by selecting an operating point of the fuel cell corresponding to the maximum of the efficiency curve (42) within an operating range comprised between the minimum value and the previously calculated maximum value, and by satisfying at least a plurality of the following criteria:
- the power supplied by the battery (16) converge towards the first setpoint value,
- control commands issued by a driver are complied,
- said at least one auxiliary equipment is powered, and
- the fluctuations in the power required from the fuel cell (8) over time are slow.

8. An electric vehicle (2) comprising a power supply system according to claim 7.
